# EUROPEAN PATENT APPLICATION

(11) **EP 2 460 839 A1**
(43) Date of publication of application: **06.06.2012**
(21) Application number: 10193471.9
(22) Date of filing: 02.12.2010
(51) Int. Cl.: C08G 69/26, C08G 69/28, B01D 1/26

(54) **Method of making Polyamide 66**

(71) Applicant: Stamicarbon B.V. acting under the name of MT Innovation Center, 6135 KW Sittard (NL)
(72) Inventor: The designation of the inventor has not yet been filed
(74) Representative: Jansen, Cornelis Marinus

(57) **Abstract**

Disclosed is a process for the preparation of polyamide 66 from an aqueous solution of hexamethylene diamine adipic acid salt (AH salt), wherein a solution of AH salt is first concentrated. The concentration is done in at least two steps, by at least two concentrators in series. The staged concentration is combined with subsequent polymerization in a plurality of reactors placed in parallel and operated in a batch mode. The process allows considerable energy-saving, by applying the steam from one concentrator as a heating medium in another concentrator.

## Description

### Field of the Invention

The invention pertains to a method of making polyamide 66 (PA66) from hexamethylene diamine adipate (AH salt). The invention also pertains to plant for the production of polyamide 66 in a batch operation, and to the use of AH salt concentrators and reactors in such an operation.

### Background of the Invention

Polyamide 66 (PA66) is a widely used polymer, e.g. known as an engineering plastic. It is also known as Nylon 6,6. Its molecular structure comprises repeating units on the basis of hexamethylene diamine and adipic acid: [NH-(CH₂)₆-NH-CO-(CH₂)₄-CO]ₙ, with n being the polymerization degree (number of repeating units).

PA66 can be produced in a continuous process or in a discontinuous (batch) process. A frequently used method to produced PA66 in a discontinuous operation, is by using the salt of hexamethylene diamine and adipic acid (known as "AH salt") as a starting material. This salt is commercially available in the form of aqueous solutions of typically 48-52 wt.% or 60-62 wt.%. Polyamide 66 is produced by removing water from the aqueous solution.

When salt is used with the aforementioned concentrations, e.g. a concentration around 50 wt.%, a very high energy input is needed to evaporate the excess water. It is desired, for economical and environmental reasons, to provide a method of making PA66 from AH salt that enables a reduction of the energy input.

One way of reducing the energy input required for evaporation of water, would be to start from a more concentrated AH salt solution.

A known method of concentrating a solution of about 50 wt.% AH salt to about 80wt.% is by heating the solution in a single vessel under mixing conditions. Since this method itself requires a high energy input, it would not particularly contribute to solving the aforementioned problem. Further, the mixing is generally affected by providing the vessel with a circulation loop and a recirculation pump. Such pumps typically are provided with a mechanical seal, wherein the mechanical seal is provided with water flushing. A risk of the setup is that water can leak into the process stream, thereby slowing down the process of concentrating the AH salt, and making the efficiency of the unit operation still worse (as additional energy is needed to perform the same operation, due to an additional amount of water to be evaporated).

Moreover, even if a more energy-saving method were available to concentrate the AH salt, the use of a higher concentrated solution of AH salt meets with technical difficulties *per se.* e.g., high concentration AH salt solutions have a lower shelf-life than more diluted solutions (typically 15 days as maximum) because they need to be stored at higher temperatures (typically 85-90°C instead of 50-55°C), in order to avoid crystallization. The higher temperature, in turn, has drawbacks since the salt, on account of the combination of the higher concentration and temperature, has a tendency to degrade. Such degradation can lead to a progressive yellowing of the solution, which is indicative for a general worsening of parameters that are relevant to product quality. It will be appreciated that this can cause substantive quality issues in respect of the polymer produced.

It is an object of the present invention to produce a high concentration AH salt suitable for polymerization in a batch reaction with reduced energy requirement while avoiding the above mentioned and other problems.

### Summary of the Invention

In order to better address one or more of the foregoing desires, the invention, in one aspect, provides a process for the preparation of polyamide 66 from an aqueous solution of hexamethylene diamine adipic acid salt (AH salt) comprising the steps of
(a) providing an AH salt solution of between 30 wt.% and 60 wt% AH salt;
(b) concentrating said AH salt solution in a plurality of concentrators to form a concentrated AH solution with a concentration of 65-95wt.%;
(c) subjecting said concentrated AH solution to polymerization in a plurality of reactors,
wherein from at least one of the concentrators an evaporated water stream results that is used as a heating medium in at least one other of the concentrators, and wherein the reactors are operated in a batch mode.

In another aspect, the invention pertains to the use of a multistage salt solution concentration process for the purpose of concentrating an AH salt solution that is subsequently used for the preparation of polyamide 66.

In yet another aspect, the invention provides the use of a plurality of reactors operated in a batch mode for the purpose of polymerizing an aqueous solution of AH salt having a concentration of 65wt.% to 95wt.%.

In a still further aspect, the invention relates to a plant for the production of polyamide 66 from an aqueous solution of hexamethylene diamine adipic acid salt, said plant comprising at least two concentrators (12, 13) for AH salt placed in series and, in series with said concentrators, a parallel set of at least two polymerization reactors (14,15), wherein at least one of the concentrators (13) is provided with a flow line for water vapour to a heat exchanger (19) connected to at least one other concentrator (12).

### Brief Description of the Drawings

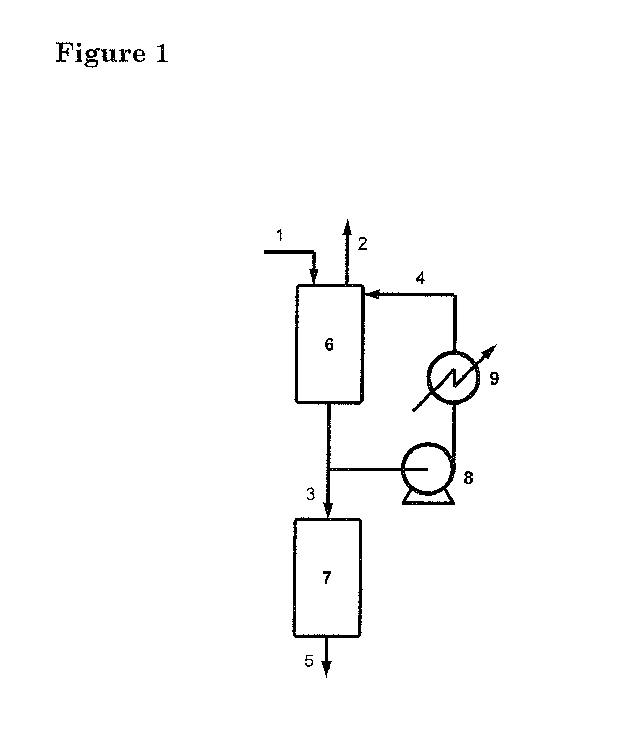

Figure 1 is an embodiment of the prior art. Flows are shown of AH salt solution (1), water vapour (2), concentrated AH salt solution (3) and recirculation thereof (4), produced PA66 (5). Equipment parts shown are a concentrator (6), a polymerization reactor (7), a centrifugal pump (8) and a heat exchanger (9).

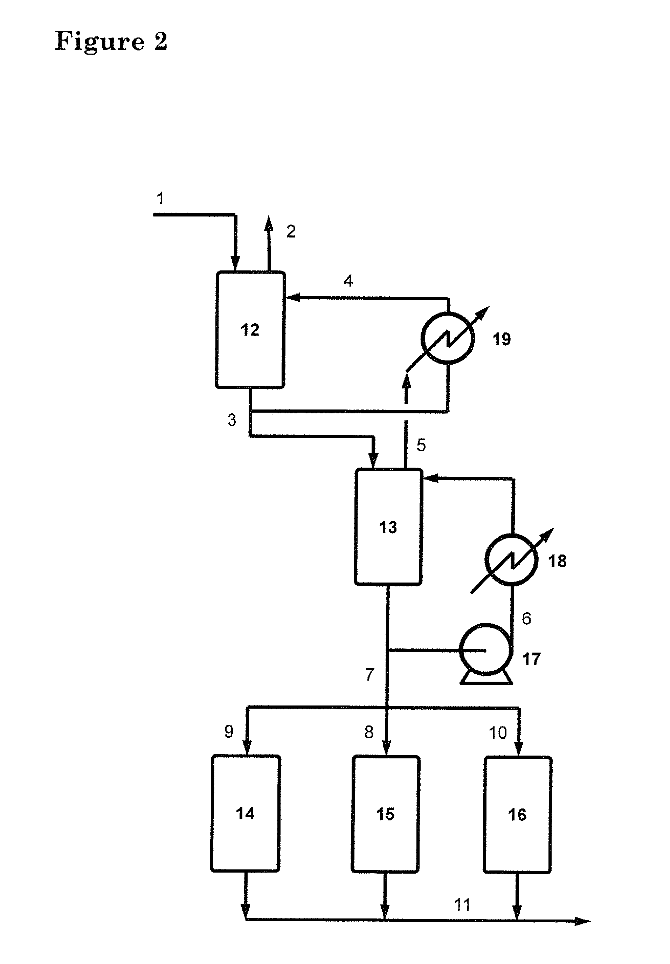

Figure 2 is an embodiment of the invention. A flow is shown of AH salt solution (1) to a first concentrator (12); water vapour (2), a flow of a first concentrated AH salt solution (3) to a second concentrator (13), and recirculation of said first concentrated solution (4) via a heat exchanger (19), a flow of water vapour (5) to said heat exchanger (19), a second concentrated AH salt solution (7), recirculation thereof (6) via a pump (17) and a heat-exchanger (18), and flows of concentrated AH salt solution (8), (9), (10), to a plurality of polymerization reactors (14), (15), (16); and a flow of produced PA66 (11).

### Detailed Description of the Invention

In a general sense, the invention is based on the judicious insight to combine, in preparing PA66 from AH salt, a multistage salt solution concentration with a batch polymerization in a plurality of reactors. The use of a plurality of reactors, operated in batch mode, allows the multistage concentration to be conducted in a way that avoids the aforementioned problem connected with the shelf-life (while heated) of the concentrated salt.

In theory, the concentrated AH salt solution presented to the plurality of reactors operated in a batch mode can come from a standard method of concentrating, i.e. in a single concentration step. However, this does not lead to a full benefit of the invention, since the problem of the high energy-input for concentrating the AH salt solution is not solved. This problem is solved by the use of a plurality of concentrators, particularly enabling the use of the evaporated water (steam) from one concentrator for the heating of another concentrator.

It will be understood that, purely from a polymerization point of view, the polymerization of a concentrate obtained from multiple concentrators, could also be conducted in a single reactor. Even setting aside the above problem of storage of the concentrated AH salt solution, this is not preferred. The batch process would then necessarily include substantial intermissions, serving the discharge of polymer from the reactor and the loading of a new batch of concentrated AH salt solution into the reactor. In that case the multistage concentration will involve corresponding intermissions. In order to benefit from the energy reduction available by using the evaporated water from one concentrator for the heating of another concentrator, the heat available would have to be stored before it can be used in the heating in a next concentration step. This would be undesirable, as the necessary recovery of heat at a later point in time would require a heating system based on a liquid heat transfer medium. This would increase the complexity and investment costs of the plant. Hence it is preferred that the set-up of the concentrators and the polymerization reactors is such as to allow the direct use of the available heat.

The present invention will further be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The process of the invention starts with making or obtaining an AH salt solution. AH salt is obtained from the reaction between adipic acid and hexamethylene diamine, in aqueous solution, according to the following reaction scheme:

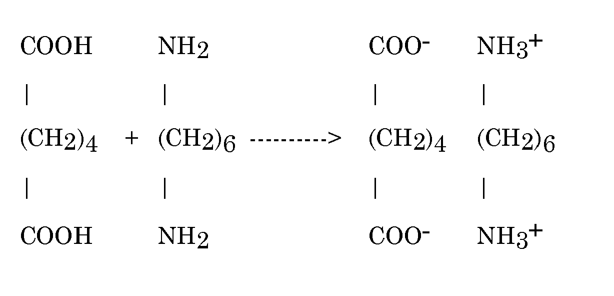

The final product is a salt solution, with a pH of preferably approximately 7.55÷7.60 and kept at an elevated temperature of preferably 50÷55°C, in order to avoid crystallisation as well as thermal degradation of the salt. Other conditions of pH and temperature are conceivable to the skilled person.

The AH salt solution as produced will have a concentration lower than desired for the polymerization. In general this refers to a concentration of 30 wt.% to 60 wt.%. Preferably, the concentration of the starting solution of AH salt is 45 wt.% to 55 wt.%, and more preferably about 50 wt.% (generally 48wt.% to 52 wt.%).

The AH salt solution is subjected to a multistage concentration process, by passing it through a plurality of concentrators. A concentrator is generally a vessel, or other equipment capable of containing a liquid, that can be heated so as to evaporate water contained in it, and which has an outlet for the evaporated water. The heating typically occurs via a heat exchanger, e.g. in the form of a tube inside the concentrator or a jacket around it, or both, wherein a heating fluid, such as a hot liquid or steam, is provided to the heat exchanger. Other heat exchangers or other ways of using steam to heat a concentrator are conceivable to the skilled person.

The concentration is carried through to an extent as desirable for polymerization of the AH salt into PA66. This generally refers to a solution having a concentration of AH salt of 65 wt.% to 95wt.%. A preferred minimum concentration is at least 70wt.%. A preferred maximum concentration is at most 90wt.%. Too low a concentration will not lead to an efficient use of energy, as outlined above. Too high a concentration increases the risk of a premature onset of polymerization. A most preferred concentration range is therefore between 75 wt.% and 85 wt.%.

The concentration increase is achieved through a plurality of concentrators. These can be placed in series, although it is conceivable that one or more additional concentrators are placed in parallel. In theory the number of concentrators used is unlimited, and could e.g. be as high as 10, but it will be immediately understood that too high a number is neither economical, nor practical. It is noted that the invention is particularly well-placed in the context of batch polymerization. Plants for such batch processes generally are chosen so as to require a relatively low investment, and too high a number of plant components would speak against this. Thus, the number of concentrators preferably is at most five, and more preferably two to three. The use of two concentrators is the most preferred, since this enables already a considerable energy saving, with a minimum of equipment components.

The increments by which the multistage, preferably two-stage, concentration is conducted until the final concentration is reached can, in theory, be chosen freely. E.g., a first concentrator could increase the concentration by 1-5wt.%, and a next concentrator by 10-20wt.%. However, in order to optimally benefit from the energy released from one concentrator, in the form of evaporated water, in a next concentrator, it is preferred that the increments are approximately equal in terms of the amount of evaporated water (steam) produced. In terms of concentration increments, this means that a subsequent concentrator will see a relatively larger increase in concentration, since the ratio of water to salt decreases from a first concentrator to a next, in which the more concentrated solution of the first concentrator is subjected to further concentration. E.g., to go from 50wt.% salt concentration to 60wt.% salt concentration amounts to the evaporation of 10/50, i.e. 20wt.%, of the water present. The same amount of water evaporated in a next concentrator would then amount to 10/40, i.e. 25wt.% of the water present. Thus, in this example, in the first stage the concentration will rise from 50wt.% to 60wt.% and in the next stage from 60wt.% to 75wt.%.

Preferably, the concentration is conducted in two concentrators placed in series, and the steps are substantially equal in terms of the amount of water evaporated. It will be understood by the skilled person that it is possible to deviate herefrom, should such be desired, at cost of the optimum energy-balance in the process.

In a preferred embodiment of a two-stage concentration, the first concentration step serves to evaporate water so as have the AH salt concentration move from 50-52wt.% to 62-65wt.%. In the second concentration stage the AH salt solution concentration moves from 62-65wt.% to 80-85wt.%.

In one embodiment the system consists of 2 concentrators, each comprising a vessel, a circulation loop and a heat exchanger.

In one embodiment the first concentrator concentrates the AH salt solution up to a concentration of about 60-65wt.%. In one embodiment the final concentration is less than 70wt.%. The first concentrator comprises a vessel, a circulation loop and a vertical shell and tube heat exchanger. The AH salt is on the tube side of the heat exchanger. In a preferred embodiment the circulation of the AH salt is effected by natural convection due to the thermal energy input.

In one embodiment the second concentrator comprises a vessel, a circulation loop, a heat exchanger and a pump, wherein the AH salt solution is concentrated up to a concentration of 78-85wt.%, preferably about 82wt.%. In a preferred embodiment the pump is a magnetic driven centrifugal pump. An example of a magnetic driven pump is a Finder pump. The recirculation pump provides a liquid velocity in the circulation loop of at least higher than 2.5 m/s to avoid build up of material on the walls of the heat exchanger. The pump is a self draining pump.

In one embodiment the heat exchanger in the second concentrator is a horizontal shell and tube heat exchanger operated with the AH salt in the tubes. Preferably it is a 2 pass or 4 pass heat exchanger.

The pressure in the first concentrator will typically be between 1.0 bar (atmospheric) and 1.5 bar, preferably between 1.05 and 1.15 bar, for example 1.10 bar.

The pressure in the second concentrator will typically be between 2.0 and 5.0 bar, preferably between 3.0 and 4.0 bar, for example 3.5 bar.

The temperature in the first concentrator will typically be between 105°C and 115°C, preferably between 107°C and 110°C, for example 108°C.

The temperature in the second concentrator will typically be between 150°C and 170°C, preferably between 155°C and 165°C, for example 160°C.

The recovery steam from the second concentrator will have a temperature between 120 and 125°C and a pressure between 2 and 2.5 bar.

The pressure in the second heat exchanger will be 4.0 to 7.0 bar. The temperature between 120 and 180 °C.

In one embodiment the concentrator vessel is insulated but not jacketed. In a preferred embodiment the insulation covers the bottom and side of the vessel, but does not cover completely the top of the vessel. In one embodiment the insulation extends to the tangent line at the top of the reactor. In another embodiment the insulation covers up to 75wt.% of the length between the tangent lines of the vessel. The inventors have found that by allowing the top of the vessel to be at a lower temperature than the walls and bottom of the vessel, the formation of built-in and embodied contaminant solid particles is avoided or reduced.

In one embodiment the concentrated AH salt solution is polymerized in a batch process cycle performed in parallel in 3 or 4 reactors, wherein the concentration step, the filling step, the polymerization step and the discharge step in each of the 3 or 4 reactors are alternated with.

As outlined above, the multistage, preferably two-stage, concentration is combined with a batch polymerization conducted in a plurality of reactors. Here too, the number of reactors in theory can be unlimited, and could for instance be as high as ten, but too high a number will not normally make sense, from a technical or economical point of view, in a batch polymerization plant. Preferably the number of reactors is at least 2 and at most 6. More preferably, the number of reactor is at least 3 and at most 5. Most preferably 3-4 reactors are used, and the most preferred embodiment of the invention combines 2 concentrators with 4 reactors.

The use of a plurality of reactors serves to provide a batch process for which the input as given by the preceding step of concentrating an AH salt solution, can be largely without intermission. As outlined above, this has an at least twofold advantage. One is that a concentrated AH salt solution can be used whilst avoiding the drawbacks related to the heated storage thereof. Another is that the preceding concentration of the AH salt solution can be conducted in two or more steps in such a way that the evaporated water obtained in one such step, can be used in heating the solution for concentration in another such step.

In view of the potential advantages attainable, the invention, in one aspect, also relates to the use of a plurality of reactors operated in a batch mode, for the purpose of polymerizing an aqueous solution of AH salt having a concentration of 65wt.% to 95wt.%.

In another aspect, the invention pertains to the use of a multistage salt solution concentration process for the purpose of concentrating an AH salt solution that is subsequently used for the preparation of polyamide 66. It will be understood from the foregoing description, that the choice of concentrating the AH salt solution in two or more stages brings about the possibility to reduce the energy input required for the concentration.

In a still further aspect, the invention relates to a plant for the production of polyamide 66. Said plant is capable of conducting the process described hereinbefore, i.e. the concentration of AH salt in multiple stages, and the subsequent polymerization in a plurality of reactors. In a preferred embodiment, the plant comprises 2-5, preferably 2-3, and more preferably 2 concentrators in series. At least two of these concentrators are connected in such a way that the evaporated water of one, can be used as a heating medium for the other. E.g., the evaporated water of a first concentrator is fed to the heater of a second concentrator, or the other way around. The other concentrator will receive steam, or another heat transfer medium, from outside the plant, such as by drawing and heating water from the network or, to the extent available, from elsewhere in the plant's environment (like coupling with other plants in an industrial complex). In the case of more than two concentrators, only one needs to receive steam, or another external heating source such as a liquid heat transfer medium, from outside of the plant. All of the other concentrators will be able to operate on the basis of steam from yet another one of the concentrators.

It will be understood by the skilled person that the plant comprises feeding units and fluid connections as necessary. E.g., the plant comprises a feeding unit for an AH salt solution. The feeding unit comprising a fluid connection with at least the first of a plurality of concentrators for the concentration of the AH salt solution. These concentrators being placed in series, the at least last of said concentrators comprises fluid connections with a plurality of reactors for the polymerization of a concentrated AH salt solution. According to an embodiment of the invention, at least one of the concentrators comprises a heater capable of operating with hot water or steam, or any other liquid heat transfer medium, said heater being connected with an outlet for evaporated water from a subsequent concentrator in said series.

Except for the novel design of having a plurality of reactors placed in parallel and operated in batch mode, the polymerization (polycondensation) can be conducted in various manners known to the skilled person and does not require elucidation here.

This also holds for customary after-treatments such as chipping, drying and chip conditioning.

For an embodiment of the plant, further reference is made to Fig.2 as described above.

The invention will be illustrated hereinafter with reference to the following, non-limiting, examples.

### Example 1

PA66 is produced from AH salt in an embodiment of the prior art as depicted in Fig.1. An approximately 50wt.% solution of AH salt (1) is fed to concentrator 6. Water vapour is removed via 2. The solution is recirculated with centrifugal pump 8 and heated via heat exchanger 9. The heat transfer medium is steam. Centrifugal pump 8 is a self draining pump with a mechanical seal with water as the seal liquid. The horizontal liquid velocity is about 2.5 m/s. The AH solution is concentrated up to a concentration of about 80 wt.% in about 1 hour. The concentrated AH solution is being recirculated until the polymerization reactor 7 is finished with the previous batch and emptied. Then the pump 8 is stopped and the concentrated AH solution is transferred by gravity and differential pressure to the polymerization reactor 7. While the concentrated AH solution is polymerized the next batch of AH solution can be fed into the concentrator and be concentrated up to about 80wt.% solution. The steam consumption is approximately 1400 kg medium pressure steam per ton of final PAA66 polymer.

### Example 2

PA66 is produced from AH salt in an embodiment of the invention as depicted in Fig.2. Therein a concentration system is used comprising two concentrators in series, and three polymerization reactors in parallel. An approximately 50wt.% AH salt solution is fed to a first concentrator vessel 12. Recirculation takes place by natural convection due to the heat input in heat exchanger 19 in the recirculation line 4. Heat exchanger 19 is a vertical shell and tube heat exchanger with the AH salt solution in the tubes. The heat exchange medium on the shell side is steam which is the vapour stream 5 from concentrator 13. When the concentration of AH salt in concentrator 12 has reached approximately 65wt.% with a final temperature of approximately 107 to 110°C, the solution is dropped via line 3 into a second concentrator vessel 13. This concentrator vessel has a recirculation loop with a recirculation pump and a horizontal shell and tube heat exchanger. The heat exchanger may be a 2 pass or 4 pass heat exchanger. The recirculation pump preferably is a magnetic drive centrifugal pump with sufficient capacity to provide for a liquid velocity of 2.5 to 3.5 m/s, for example 3.0 m/s in the tubes. Both concentrator vessels 12 and 13 are insulated but not jacketed and the insulation covers the bottom and side of the vessels, but not the top. In a preferred embodiment the insulation reaches until the top tangent line of the vessel. After reaching a salt concentration of about 80-85wt.% and a final temperature of approximately 155 to 165°C in concentration vessel 13 the concentrated salt solution is transferred by gravity and differential pressure into one of the polymerization reactors 14, 15 or 16. The steam consumption in this setup is approximately 800 kg steam/ton of PA66 final polymer. The total cycle time of the concentration step is approximately 30 min. In polymerization reactors 14, 15 or 16 the polymerization reaction takes place. The polymerization cycle is carried out batch in a staggered manner in such a way that the concentrated solution is transferred alternately into the polymerization reactors. Thus, at a given point in time, one reactor will be in the process of being charged with the concentrated salt solution while another reactor will be in the process of polymerizing and another reactor may be in the process of transferring the final product to a finishing stage, for example a granulation stage. The entire process is carried out in such a way that the waiting time for the concentration step and the polymerization step is minimized. In an exemplary embodiment one concentration system will feed three polymerization reactors. In another embodiment one concentration system will feed four polymerization reactors.

## Claims

1. A process for the preparation of polyamide 66 from an aqueous solution of hexamethylene diamine adipic acid salt (AH salt) comprising the steps of
(a) providing an AH salt solution of between 30 wt.% and 60 wt% AH salt;
(b) concentrating said AH salt solution in a plurality of concentrators to form a concentrated AH solution with a concentration of 65-95wt.%;
(c) subjecting said concentrated AH solution to polymerization in a plurality of reactors,
wherein from at least one of the concentrators an evaporated water stream results that is used as a heating medium in at least one other of the concentrators, and wherein the reactors are operated in a batch mode.

2. A process according to claim 1, wherein said evaporated water stream is used as a heating medium for said other concentrator.

3. A process according to claim 1 or 2, wherein the AH salt solution provided in step (a) has a concentration of 45 wt.% to 55 wt.%, preferably 48wt.% to 52 wt.%.

4. A process according to any one of the preceding claims, wherein the concentrated AH salt solution formed in step (b) has a concentration in a range of from 70wt/% to 90wt.%, preferably 75 wt.% to 85 wt.%.

5. A process according to any one of the preceding claims, wherein the a number of 2-3 concentrators is used, placed in series, preferably 2.

6. A process according to any one of the preceding claims, wherein a number of 2 to 6 reactors is used, placed in parallel, preferably 3-4.

7. A process according to any one of the preceding claims, wherein the concentration of the AH salt solution is conducted in 2 concentrators placed in series, and the polymerization is conducted in 4 reactors places in parallel.

8. The use of a multistage salt solution concentration process for the purpose of concentrating an AH salt solution that is subsequently used for the preparation of polyamide 66.

9. The use of a plurality of reactors operated in a batch mode for the purpose of polymerizing an aqueous solution of AH salt having a concentration of 65wt.% to 95wt.%.

10. A plant for the production of polyamide 66 from an aqueous solution of hexamethylene diamine adipic acid salt, comprising at least two concentrators (12, 13) for AH salt placed in series and, in series with said concentrators, a parallel set of at least two polymerization reactors (14,15), wherein at least one of the concentrators (13) is provided with a flow line for water vapour to a heat exchanger (19) connected to at least one other concentrator (12).

11. A plant according to claim 10, wherein the number of concentrators is 2-3, preferably 2.

12. A plant according to claim 10 or 11, wherein the number of reactors is 2-6, preferably 3-4.

13. A plant according to claim 12, wherein the number of concentrators is two and the number of reactors is four.
